# EUROPEAN PATENT APPLICATION

(11) **EP 3 930 041 A1**
(43) Date of publication of application: **29.12.2021**
(21) Application number: 20760157.6
(22) Date of filing: 18.02.2020
(51) Int. Cl.: H01M 4/13, H01M 4/131, H01M 4/134, H01M 4/136, H01M 4/36, H01M 4/38, H01M 4/48, H01M 4/485, H01M 4/50, H01M 4/505, H01M 4/525, H01M 4/58, H01M 4/62, C01B 32/15

(54) **BATTERY MATERIAL**

(30) Priority: 21.02.2019 JP 2019029706
(71) Applicant: Nissan Chemical Corporation, Tokyo 103-6119 (JP)
(72) Inventor: KASEYAMA Takahiro, Funabashi-shi, Chiba 274-0052 (JP); ODAKA Kazutoshi, Funabashi-shi, Chiba 274-0052 (JP); KATO Hirokazu, Funabashi-shi, Chiba 274-0052 (JP); ISAJI Tadayuki, Funabashi-shi, Chiba 274-0052 (JP)
(74) Representative: Mewburn Ellis LLP
(86) International application number: PCT/JP2020/006304
(87) International publication number: WO 2020/171072

(57) **Abstract**

The present invention provides a battery material which contains a carbon nanostructure, and which is characterized in that the carbon nanostructure is not electrically conductive, while containing nitrogen.

## Description

### TECHNICAL FIELD

The present invention relates to a battery material including a carbon nanostructure.

### BACKGROUND ART

In recent years, downsizing and weight reduction of electronic devices have been promoted, and downsizing and weight reduction of batteries, the power supplies for the electronic devices, are also required. Nonaqueous electrolyte secondary batteries such as lithium ion batteries have been put into practical use as small, lightweight, and high capacity chargeable and dischargeable batteries, and are used in portable electronic devices, communication devices and the like such as small video cameras, mobile phones, and notebook computers.

Lithium ion secondary batteries have high energy density, and have excellent advantages such as higher capacity and operating voltage than other batteries. However, due to the high energy density, there may be a risk of overheating or an accident such as ignition depending on usage conditions, and high safety is required. In particular, in a hybrid vehicle, which is recently in the limelight, higher energy density and output characteristics are required, and thus further higher safety is required.

In general, a lithium ion secondary battery is composed of a positive electrode, a negative electrode, and an electrolyte, and during charging, lithium ions come out of the positive electrode active material into the electrolyte and are inserted into the negative electrode active material such as carbon particles. During discharge, lithium ions come out of the negative electrode active material into the electrolyte and are inserted into the positive electrode active material, whereby a current can be taken out to an external circuit. As described above, in the lithium ion secondary battery, lithium ions move back and forth between the positive electrode and the negative electrode via the electrolyte, whereby charging and discharging are performed.

Meanwhile, as performance of portable electronic devices and the like is improved, batteries with higher capacity are required, and Sn, Si and the like, which have a capacity per unit weight much higher than that of existing carbon, are actively studied as a negative electrode active material. However, if Si or a Si alloy is used as a negative electrode active material, there is a problem that volume expansion increases and cycle characteristics deteriorate. To solve this problem, graphite is mixed. However, if graphite is non-uniformly distributed during mixing, cycle characteristics (life) may be decreased.

In recent years, as lithium ion secondary batteries are versatilely used, and for example, are used as high-output power supplies for plug-in hybrid vehicles, hybrid vehicles, electric tools and the like, further improvement of rate characteristics is required. Batteries used as these high-output power supplies are required to perform charging and discharging at high speed.

In the positive electrode active material currently put into practical use, the theoretical capacity of the positive electrode active material is much lower than the theoretical capacity of the negative electrode active material. Thus, to realize high capacity and high output of lithium ion batteries, the positive electrode needs to have high conductivity and ion conductivity. Thus, a method of adding a carbon material as a conductive additive to the electrode to improve the electron conductivity in the positive electrode is used. As such a carbon material, examples of using graphite, acetylene black, or Ketjenblack are reported, and in recent years, examples of using carbon nanotubes or graphene are reported. However, if the amount of such a conductive additive is increased, the amount of the active material in the electrode decreases, and the capacity of the battery decreases.

There has also been proposed an electrode material in which the particle surface of the electrode active material is covered with an organic compound as a carbon source, then the organic compound is carbonized to form a carbonaceous film on the surface of the electrode active material, and the carbon of the carbonaceous film is used as an electron conductive substance to increase the electron conductivity of the electrode material (for example, Patent Document 1). However, the carbonization step requires a long-time heat treatment at a high temperature of 500°C or more under an inert gas atmosphere, and this heat treatment reduces the capacity of the electrode. In addition, heating is performed at a high temperature of 500 to 800°C in a reducing atmosphere or an inert atmosphere during the carbonization treatment, and thus the positive electrode active material itself may also be reduced. Thus, usable positive electrode active materials are limited to lithium iron phosphate, lithium nickel phosphate, lithium cobalt phosphate, lithium manganese phosphate and the like. The carbon source in the case of other positive electrode active materials is limited to a polymer material having conductivity.

### PRIOR ART DOCUMENTS

### PATENT DOCUMENTS

Patent Document 1: JP-A 2001-15111

### SUMMARY OF INVENTION

### TECHNICAL PROBLEM

The present invention has been made in view of the above circumstances, and an object of the present invention is to provide a battery material that can be suitably used as a material for forming a battery such as a lithium ion secondary battery and can improve rate characteristics of a battery.

### SOLUTION TO PROBLEM

As a result of intensive studies to achieve the above object, the present inventors have found that a battery produced using a battery material including a carbon nanostructure that is non-conductive and contains nitrogen is excellent in rate characteristics, thereby completing the present invention.

That is, the present invention provides the following battery material.
1. A battery material, including: a carbon nanostructure, wherein the carbon nanostructure is non-conductive and contains nitrogen.
2. The battery material according to 1, wherein the carbon nanostructure is a carbon quantum dot.
3. The battery material according to 1 or 2, wherein the nitrogen is contained in an amount of 5 to 30 wt%.
4. The battery material according to any one of 1 to 3, wherein the nitrogen is derived from an amine.
5. The battery material according to any one of 1 to 4, wherein carbon contained in the carbon nanostructure is derived from a polycarboxylic acid or a saccharide.
6. The battery material according to any one of 1 to 5, further including an active material, conductive carbon, and a binder.
7. The battery material according to 6, wherein the active material is at least one selected from a metal, a metalloid, a metal alloy, a metal oxide, a metalloid oxide, a metal phosphorus oxide, a metal sulfide, and a metal nitride.
8. The battery material according to 7, wherein the active material is at least one selected from FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, and 0.05 ≤ z ≤ 1.10 and 0.5 ≤ y ≤ 1.0.), Li(NiaCo_{b}Mn_{c})O₂ (provided that 0 < a < 1,0 < b < 1,0 < c < 1,a + b + c=1), Li₄Ti₅O₁₂, Si, SiOx, AlOx, SnOx, SbOx, BiOx, GeOx, AsOx, PbOx, ZnOx, CdOx, InOx, TiOx, and GaOₓ (provided that 0 < x ≤ 2).
9. The battery material according to any one of 6 to 8, for electrode formation.
10. An electrode, including: an active material layer composed of the battery material according to 9.
11. A secondary battery, including the electrode according to 10.
12. A method for producing the battery material according to any one of 1 to 9, including the step of: synthesizing a carbon nanostructure by mixing and heating a polycarboxylic acid or a saccharide; an amine; and a solvent.
13. The method for producing the battery material according to 12, wherein the synthesis is performed by solvothermal synthesis.
14. The method for producing the battery material according to 13, wherein the synthesis is performed by hydrothermal synthesis.
15. The method for producing the battery material according to 14, including the step of:
   replacing a solvent of an aqueous carbon nanostructure solution obtained by hydrothermal synthesis with an organic solvent.
16. A method for producing the battery material according to any one of 6 to 8, including the step of: preparing a solution or a dispersion containing an active material and a carbon nanostructure, and then removing a solvent to produce an active material-carbon nanostructure composite.

### ADVANTAGEOUS EFFECTS OF INVENTION

By using the battery material of the present invention, a battery having excellent rate characteristics can be provided.

### DESCRIPTION OF EMBODIMENTS

The battery material of the present invention includes a carbon nanostructure, and the carbon nanostructure is non-conductive and contains nitrogen. In the present invention, a battery having excellent rate characteristics and cycle characteristics can be obtained by using a carbon nanostructure having such characteristics. In the present invention, "non-conductive" means that the conductivity of the obtained carbon nanostructure powder measured with a low resistance meter Loresta-GP manufactured by Mitsubishi Chemical Analytech Co., Ltd. is equal to or lower than the detection limit (resistance value is more than 10⁷ Ω).

A carbon nanostructure is generally a structure that is composed mainly of carbon atoms and in which at least one dimension of three-dimensional dimensions of the structure is in a region of nanometers. For example, the at least one dimension has an order of about several nanometers to several 100 nanometers.

The nitrogen content of the carbon nanostructure is not particularly limited as long as the carbon nanostructure contains nitrogen, and is preferably 5 to 30 wt%, more preferably 10 to 25 wt%, and still more preferably 10 to 20 wt% considering further improvement of the discharge capacity of the battery to be obtained.

Examples of the carbon nanostructure include a carbon quantum dot; a graphene quantum dot into which nitrogen atoms are introduced by surface treatment, modification, functional group modification or the like; an amine-modified diamond-like carbon; a modified cellulose nanofiber; a fluorescent nanodiamond; and the like; which satisfy the above-mentioned conductivity and nitrogen content. Among these, a carbon quantum dot, which is a carbon material having an mean particle size of 20 nm or less, is preferable.

The mean particle size is a value measured with a transmission electron microscope (TEM).

The carbon nanostructure can be produced by a known method, and can be obtained, for example, by mixing a carbon source composed of a polycarboxylic acid or a saccharide and a nitrogen source composed of an amine as raw materials with a solvent, and heating the mixture.

The polycarboxylic acid is not particularly limited as long as the polycarboxylic acid is a carboxylic acid having two or more carboxy groups. Specific examples thereof include citric acid, oxalic acid, malonic acid, succinic acid, fumaric acid, itaconic acid, malic acid and tartaric acid, quinic acid, galactaric acid, glyceric acid, gluconic acid, glucuronic acid, ascorbic acid, and gallic acid. Among these, citric acid, succinic acid, and oxalic acid are preferable, and citric acid is more preferable. The polycarboxylic acid can be used singly or in combination of two or more types thereof.

Examples of the saccharide include a monosaccharide, a disaccharide, and a polysaccharide. These saccharides can be used singly or in combination of two or more types thereof.

The monosaccharide is preferably one having 3 to 9 carbon atoms, and is particularly preferably one having 5 to 6 carbon atoms. Specific examples thereof include pentoses such as xylose; hexoses such as glucose, mannose, and galactose; deoxyhexoses such as fucose; hexosamines such as glucosamine and galactosamine; hexosamine derivatives such as N-acetylglucosamine and N-acetylgalactosamine; sialic acids such as neuraminic acid, N-acetylneuraminic acid, and N-glycolylneuraminic acid; and uronic acids such as glucuronic acid and iduronic acid. Among them, hexose is preferable, and glucose is more preferable. The monosaccharide can be used singly or in combination of two or more types thereof.

Examples of the disaccharide include sucrose, lactulose, lactose, maltose, trehalose, and cellobiose. The disaccharide can be used singly or in combination of two or more types thereof.

Examples of the polysaccharide include starch, amylose, amylopectin, glycogen, cellulose, chitin, agarose, carrageenan, heparin, hyaluronic acid, pectin, xyloglucan, and glucomannan. Among them, those which can be dissolved in water are preferable from the viewpoint of synthesis. The polysaccharide can be used singly or in combination of two or more types thereof.

Examples of the amine include an aliphatic amine, an aromatic amine, a hydroxylamine, a polyamine, a heterocyclic amine, an amino acid, and an amino group-containing polyalkylene glycol. Among these, an aliphatic amine, an aromatic amine, and an amino acid are preferable. The amine can be used singly or in combination of two or more types thereof.

Examples of the aliphatic amine include monoamines such as methylamine, ethylamine, n-propylamine, isopropylamine, n-butylamine, isobutylamine, s-butylamine, t-butylamine, n-pentylamine, 1-methyl-n-butylamine, 2-methyl-n-butylamine, 3-methyl-n-butylamine, 1,1 -dimethyl-n-propylamine, 1,2-dimethyl-n-propylamine, 2,2-dimethyl-n-propylamine, 1-ethyl-n-propylamine, n-hexylamine, 1-methyl-n-pentylamine, 2-methyl-n-pentylamine, 3-methyl-n-pentylamine, 4-methyl-n-pentylamine, 1,1-dimethyl-n-butylamine, 1,2-dimethyl-n-butylamine, 1,3-dimethyl-n-butylamine, 2,2-dimethyl-n-butylamine, 2,3-dimethyl-n-butylamine, 3,3-dimethyl-n-butylamine, 1-ethyl-n-butylamine, 2-ethyl-n-butylamine, 1,1,2-trimethyl-n-propylamine, 1,2,2-trimethyl-n-propylamine, 1-ethyl-1-methyl-n-propylamine, 1-ethyl-2-methyl-n-propylamine, 2-ethylhexylamine, 2-aminoethanol, 1-amino-2-propanol, 2-amino-1-propanol, and 2-aminoethanethiol; and diamines such as ethylenediamine, N,N-dimethylethylenediamine, N,N'-dimethylethylenediamine, N,N-diethylethylenediamine, N,N'-diethylethylenediamine, N-ethylethylenediamine, diethylenetriamine, 1,2-diaminopropane, 1,3-diaminopropane, 2-(2-aminoethylamino)ethanol, N-isopropylethylenediamine, N-isopropyl-1,3-diaminopropane, triethylenetetramine, N,N'-bis(2-hydroxyethyl)ethylenediamine, 2,2-dimethyl-1,3-propanediamine, 2-methyl-2,3-propanediamine, 1,2-diamino-2-methylpropane, 3,3'-diamino-N-methyldipropylamine, 2,3-dimethyl-2,3-butanediamine, 3,3'-diaminodipropylamine, N,N-bis(2-aminoethyl)-1,3-propanediamine, triethylenetetramine, 2,2'-oxybis(ethylamine), tetramethylenediamine, 1,4-diaminobutane, 2,2'-thiobis(ethylamine), 1,5-diaminopentane, 2-methyl-1,5-diaminopentane, 1,6-diaminoheptane, 1,7-diaminopentane, 1,10-diaminodecane, 1,11-diaminoundecane, 1,12-diaminododecane, N,N'-bis(3-aminopropyl)ethylenediamine, diethylene glycol bis(3-aminopropyl)ether, 1,14-diamino-3,6,9,12-etraoxatetradecane, bis(aminomethyl)cyclohexane, 1,2-cyclohexanediamine, 1,3-cyclohexanediamine, 1,4-cyclohexanediamine, bis(aminomethyl)norbornane, 1,4-bis(aminomethyl)cyclohexane, and 1,2-bis(2-aminoethoxy)ethane. In the present invention, among these, compounds having two or more amino groups are preferable, and further, diamines having two carbon atoms between the amino groups are more preferable.

Examples of the aromatic amine include aralkyl monoamines such as benzylamine, p-methoxycarbonylbenzylamine, p-ethoxycarbonylphenylbenzyl, p-methylbenzylamine, m-methylbenzylamine, and o-methoxybenzylamine; aryl monoamines such as aniline, p-methoxycarbonylaniline, p-ethoxycarbonylaniline, p-methoxyaniline, 1-naphthylamine, 2-naphthylamine, anthranilamine, 1-aminopyrene, 4-biphenylylamine, o-phenylaniline, 4-amino-p-terphenyl, and 2-aminofluorene; and aryl diamines such as 1,2-phenylenediane, 1,3-phenylenediamine, 1,4-phenylenediamine, 3-nitro-1,2-phenylenediamine, 4-nitro-1,2-phenylenediamine, 3-methyl-1,2-phenylenediamine, 4-methyl-1,2-phenylenediamine, 1,2,4-benzenetriamine, 3,4-dimethyl-1,2-phenylenediamine, 4,5-dimethyl-1,2-phenylenediamine, 3-fluoro-1,2-phenylenediamine, 4-fluoro-1,2-phenylenediamine, 3,4-difluoro-1,2-phenylenediamine, 3,5-difluoro-1,2-phenylenediamine, 4,5-difluoro-1,2-phenylenediamine, 3-chloro-1,2-phenylenediamine, 4-chloro-1,2-phenylenediamine, 3,4-dichloro-1,2-phenylenediamine, 3,5-dichloro-1,2-phenylenediamine, 4,5-dichloro-1,2-phenylenediamine, 3-bromo-1,2-phenylenediamine, 4-bromo-1,2-phenylenediamine, 3,4-dibromo-1,2-phenylenediamine, 3,5-dibromo-1,2-phenylenediamine, 4,5-dibromo-1,2-phenylenediamine, 2,3-naphthalenediamine, benzidine, 3,3'-diaminobenzidine, 3,4-diaminobenzoic acid, 3,4-diaminobenzoic acid methyl, 3,4-diaminobenzoic acid ethyl, 4-(4-aminophenoxy)-1,2-benzenediamine, 3,4-diaminobenzophenone, and 5,6-diamino-1,3-dihydro-2H-benzimidazole-2-one.

Examples of the heterocyclic amine include barbituric acid, aziridine, azetidine, pyrrolidine, piperidine, piperazine, azepane, pyridine, pyridazine, pyrimidine, pyrazine, imidazole, benzimidazole, pyrazole, oxazole, isoxazole, benzoxazole, thiazole, isothiazole, benzothiazole, triazine, azepine, diazepine, benzodiazepine, pyrrole, imidazoline, morpholine, thiazine, indole, isoindole, purine, quinoline, isoquinoline, quinoxaline, pteridine, acridine, carbazole, cinnoline, benzo-C-cinnoline, porphyrin, chlorine, choline, triaminotriazine, trichlorotriazine, and derivatives thereof.

Examples of the amino acid include cysteine, glycine, alanine, valine, phenylalanine, threonine, lysine, asparagine, tryptophan, serine, glutamic acid, aspartic acid, ornithine, thyroxine, cystine, leucine, isoleucine, proline, tyrosine, asparagine, glutamine, histidine, methionine, and threonine. Examples of the amino group-containing polyalkylene glycol include an amino group-containing polyethylene glycol and an amino group-containing polypropylene glycol. If the amino acid has an optical isomer, the amino acid can be a D-form, an L-form, or a racemic form.

The amount of the amine used is preferably 10 to 300 parts by weight, and more preferably 20 to 150 parts by weight per 100 parts by weight of the carbon source from the viewpoint of nitrogen introduction efficiency.

As the raw material, an organic compound other than the carbon source and the nitrogen source can be further used. Such an organic compound is not particularly limited as long as the organic compound does not interfere with the effect of the present invention.

The solvent is not particularly limited as long as the solvent can dissolve the raw material to be used. Examples of such a solvent include water, dimethyl sulfoxide, dimethylformamide, dimethylacetamide, N-methyl-2-pyrrolidone (NMP), hexamethylphosphoric triamide, acetonitrile, acetone, alcohols (methanol, ethanol, 1-propanol, 2-propanol and the like), glycols (ethylene glycol, triethylene glycol and the like), cellosolves (ethyl cellosolve, methyl cellosolve and the like), polyhydric alcohols (glycerin, pentaerythritol and the like), tetrahydrofuran, toluene, ethyl acetate, butyl acetate, benzene, toluene, xylene, pentane, hexane, heptane, chlorobenzene, dichlorobenzene, trichlorobenzene, hexadecane, benzyl alcohol, and oleylamine. In the present invention, among them, water is preferable. The solvent can be used singly or in combination of two or more types thereof.

The amount of the solvent used is preferably 100 to 10,000 parts by weight, and more preferably 400 to 2,500 parts by weight per 100 parts by weight of the raw material from the viewpoint of obtaining a carbon nanostructure having a uniform particle size.

In the synthesis of the carbon nanostructure, an acid catalyst or a surfactant can be further contained as necessary.

The acid catalyst can be a homogeneous acid catalyst or a heterogeneous acid catalyst, and a heterogeneous acid catalyst is preferable from the viewpoint of improving the quantum yield. Examples of the homogeneous acid catalyst include inorganic acids such as hydrochloric acid, sulfuric acid, nitric acid, and phosphoric acid, and organic acids such as sulfonic acid and p-toluenesulfonic acid. Meanwhile, the heterogeneous acid catalyst is preferably a solid acid catalyst, and examples thereof include a cationic ion exchange resin, a cationic ion exchange membrane, and the solid acid catalyst described in Nature 438, p. 178 (2005). As the solid acid catalyst, a commercially available product can be used, and examples thereof include AMBERLYST (registered trademark) 15, 16, 31, 35 and the like and AMBERLITE (registered trademark) IR 120B, IR 124, 200 CT, 252 and the like of ion exchange resins manufactured by Rohm and Haas Company, NAFION (registered trademark) of an ion exchange membrane manufactured by DuPont, and inorganic solid acid catalysts such as zeolite and polyphosphoric acid. The acid catalyst can be used singly or in combination of two or more types thereof.

If a homogeneous acid catalyst is used, 0.01 to 10 parts by weight is usually added per 100 parts by weight of the raw material, and 0.1 to 5 parts by weight is more preferably added, and 0.5 to 1 parts by weight is still more preferably added.

The heterogeneous acid catalyst is preferably a porous solid having pores capable of containing the produced carbon nanostructures. The size of the pores can control the particle size or disk size of the carbon nanostructures to be produced. In general, it is preferable to produce a carbon quantum dot having a particle size (disk diameter) of up to 20 nm by a solid acid catalyst of a porous solid having a pore size of up to 20 nm.

If a heterogeneous acid catalyst is used, about 0.1 to 100 parts by weight is preferably added, 1.0 to 50 parts by weight is more preferably added, and 5.0 to 10 parts by weight is still more preferably added per 100 parts by weight of the raw material.

Examples of the surfactant include a cationic surfactant, an anionic surfactant, and a nonionic surfactant.

Examples of the cationic surfactant include cetyltrimethylammonium bromide and cetyltrimethylammonium chloride. Examples of the anionic surfactant include sodium dodecyl sulfate and sodium dodecylbenzene sulfonate. Examples of the nonionic surfactant include polyethylene glycol and polypropylene glycol. These surfactants can be used singly or in combination of two or more types thereof.

The amount of the surfactant used is preferably 10 to 2,000 parts by weight, and more preferably 50 to 500 parts by weight per 100 parts by weight of the raw material from the viewpoint of the dispersibility of the raw material and the critical micelle concentration under synthesis conditions.

In the synthesis the carbon nanostructure, the components can be mixed in any order. The synthesis can be performed in a continuous manner or batchwise manner. In the present invention, the continuous manner can be suitably employed from the viewpoint of achieving continuous and efficient production of a large amount of carbon nanostructures having a uniform particle size.

As the continuous manner, for example, a flow reactor can be suitably employed. As the flow reactor, a known instrument can be used, and examples thereof include a flow high temperature reaction system Phoenix Flow Reactor manufactured by Thales Nanotechnology Inc. By using a flow reactor, reaction under high temperature and pressure (solvothermal synthesis and hydrothermal synthesis) can be continuously and efficiently performed.

Though the reaction temperature can be appropriately adjusted according to conditions such as the type of the solvent used as the raw material solution, and is not particularly limited, the reaction temperature is preferably about 100 to 450°C, more preferably 150 to 400°C, and still more preferably 250 to 350°C from the viewpoint of efficiently performing the reaction. If the reaction temperature is too high, a carbide insoluble in the reaction solvent may be produced.

The reaction time (residence time) is preferably 1 to 30 minutes, preferably 1.5 to 20 minutes, and more preferably 2 to 16 minutes from the viewpoint of completely advancing the reaction and suppressing the production of carbides insoluble in the reaction solvent.

If the batchwise manner is employed, heating can be performed under normal pressure (atmospheric pressure) or under pressure (solvothermal synthesis and hydrothermal synthesis).

If the reaction is performed under normal pressure, the reaction temperature depends on the boiling point of the solvent to be used, and is usually preferably about 40 to 250°C, more preferably 60 to 200°C, and still more preferably 100 to 150°C. Heating is usually performed by a water bath or an oil bath. However, heating can also be performed with microwaves. Thereby, for example, if water is used as the solvent, the product can be obtained in a shorter time than the case where heating is performed by a water bath or an oil bath.

If the reaction is performed under normal pressure, the reaction time is preferably about 1 minute to 240 hours, more preferably about 10 minutes to 48 hours, and still more preferably about 12 to 30 hours.

If the reaction is performed under pressure, for example, an autoclave can be suitably used. By using an autoclave, the reaction temperature can be increased to a temperature equal to or higher than the boiling point at normal pressure. For example, even if water is used as the solvent, a reaction temperature of about 200°C can be easily achieved by performing the reaction using an autoclave.

The reaction temperature depends on the boiling point of the solvent to be used as in the case of performing the reaction at normal pressure, and is usually preferably about 100 to 450°C, more preferably 150 to 400°C, and still more preferably 250 to 350°C. The reaction time is preferably about 30 seconds to 24 hours, more preferably about 1 minute to 1 hour, and still more preferably about 2 minutes to 10 minutes.

Though pressure is not particularly limited as long as a desired reaction temperature can be achieved, the pressure is preferably about 200 kPa to 20.0 MPa, and more preferably about 500 kPa to 15.0 MPa.

If a solid acid catalyst is used in a batchwise manner, the reaction is preferably performed with stirring. A good result is obtained by increasing the stirring rate as long as the solid catalyst is not crushed. The stirring rate is preferably about 10 to 500 rpm, and more preferably about 50 to 300 rpm.

The mean particle size of the carbon nanostructure obtained by each of the above-mentioned manners is preferably 20 nm or less, more preferably 15 nm or less, and still more preferably 10 nm or less. The lower limit of the particle size is not particularly limited, and is usually 1 nm or more. If the particle size is within the above-mentioned range, the particles do not aggregate in the solvent, and aggregates are not produced even during preparation or application of the composition for electrode formation (electrode slurry or the like). Because the particle size of the carbon nanostructure is sufficiently small compared to the size of the active material, the coating property to the active material is excellent.

The obtained product can be purified by removing low-molecular-weight impurities by dialysis, ultrafiltration, or the like, and then removing high-molecular-weight impurities by centrifugation or the like. The pore size of the dialysis membrane or the ultrafiltration membrane and the centrifugal force at the time of centrifugation can be appropriately set according to the molecular weight of the target to be removed.

To perform purification for a higher purity, column purification can be performed. The column packing material in this case can be a normal phase type or a reverse phase type. As a normal phase packing material, silica particles, alumina particles and the like can be used. Meanwhile, as a reverse phase packing material, for example, silica particles surface-modified with a long-chain alkyl group can be used. From the viewpoint of shortening the time, pressurization can be performed during column purification.

When a battery material is prepared using the carbon nanostructure, a carbon nanostructure in the state of a solution after the reaction, or an isolated carbon nanostructure in which the solvent is removed can be used. If a solvent different from the solvent used in the synthesis of the carbon nanostructure is used in the preparation of the battery material, solvent replacement can be performed to obtain a target solvent system.

The battery material of the present invention can be used for formation of an undercoat layer and an active material layer of an electrode, production of an electrolyte and the like, and in particular, can be suitably used as a material for forming an active material layer of an electrode.

If the battery material is used as a material for forming an active material layer, the carbon nanostructure is preferably combined with the following active material, conductive additive, and binder, and is preferably combined with a solvent (dispersion medium) as necessary.

In the battery material, the compounding amount of the carbon nanostructure varies depending on required electrical and heat characteristics, viscosity of the material, production cost and the like, and is preferably 0.01 to 1.0 wt%, more preferably 0.01 to 0.75 wt%, and still more preferably 0.05 to 0.5 wt% in the solid content. If the compounding amount of the carbon nanostructure is within the above-mentioned range, a battery excellent in rate characteristics and cycle characteristics can be obtained.

The solid content as used herein means components other than the solvent contained in the battery material of the present invention.

As the active material, various active materials conventionally used for an electrode for an energy storage device such as a secondary battery can be used, and examples thereof include a metal, a metalloid, a metal alloy, a metal oxide, a metalloid oxide, a metal phosphorus oxide, a metal sulfide, and a metal nitride.

Specific examples of the active material include the following.

Examples of the active material of a metal include Al, Sn, and Zn.

Examples of the active material of a metalloid include Si, Ge, and As.

Examples of the active material of a metal alloy include a Li-Al alloy, a Li-Mg alloy, a Li-Al-Ni alloy, a Na-Hg alloy, and a Na-Zn alloy.

Examples of the active material of a metal oxide include AlOx, SnOx, SbOx, BiOx, PbOx, ZnOx, CdOx, InOx, TiOx, and GaOx (provided that 0 < x ≤ 2), V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, and 0.05 ≤ z ≤ 1.10 and 0.5 ≤ y ≤ 1.0.), a ternary active material (Li(NiₐCo_{b}Mn_{c})O₂ (provided that 0 < a < 1,0 < b < 1,0 < c < 1, a + b + c = 1)), a tin silicon oxide (SnSiO₃), a lithium bismuth oxide (Li₃BiO₄), a lithium zinc oxide (Li₂ZnO₂), and a lithium titanium oxide (Li₄Ti₅O₁₂).

Examples of the active material of a metalloid oxide include SiOₓ, GeOₓ, and AsOₓ (provided that 0 < x ≤ 2).

Examples of the active material of a metal phosphorus oxide include LiFePO₄.

Examples of the active material of a metal sulfide include FeS₂, TiS₂, MoS₂, Li₂S, lithium iron sulfide (LiₓFeS₂ (provided that 0 < x ≤ 3)), and lithium copper sulfide (LixCuS (provided that 0 < x ≤ 3)).

Examples of the active material of a metal nitride include LiₓM_{y}N (provided that M = Co, Ni, Cu, 0 ≤ x ≤ 3, 0 ≤ y ≤ 0.5, and x and y are not 0 at the same time) and lithium iron nitride (Li₃FeN₄).

In the present invention, among these, FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, and 0.05 ≤ z ≤ 1.10 and 0.5 ≤ y ≤ 1.0.), Li(NiₐCo_{b}Mn_{c})O₂ (provided that 0 < a < 1, 0 < b < 1,0 < c < 1, a + b + c = 1), Li₄Ti₅O₁₂, Si, SiOx, AlOx, SnOx, SbOx, BiOx, GeOx, AsOx, PbOx, ZnOx, CdOx, InOx, TiOx, and GaOx (provided that 0 < x ≤ 2) are preferable, and TiOₓ(provided that 0 < x ≤ 2) is more preferable.

Further, Li(NiₐCo_{b}Mn_{c})O₂ still more preferably satisfies 1/3 ≤ a < 1, 0 < b ≤ 1/3, 0 < c ≤ 1/3, and a + b + c = 1.

The Li(NiₐCo_{b}Mn_{c})O₂ can also be obtained as a commercially available product, and examples of such a commercially available product include NCM111 (manufactured by Beijing Easping Material Technology, manufactured by TOSHIMA Manufacturing Co., Ltd., a = 1/3, b = 1/3, c = 1/3), NCM523 (manufactured by Beijing Easping Material Technology, manufactured by JIANGSU Easping Material Technology, a = 0.5, b = 0.2, c = 0.3), NCM622 (manufactured by Beijing Easping Material Technology, a = 0.6, b = 0.2, c = 0.2), and NCM811 (manufactured by Beijing Easping Material Technology, a = 0.8, b = 0.1, c = 0.1).

The compounding amount of the active material varies depending on required electrical and heat characteristics, viscosity of the composition, production cost and the like, and is preferably 80 to 99.8 wt%, more preferably 85 to 98.5 wt%, and still more preferably 90 to 98 wt% in the solid content.

Examples of the conductive additive include carbon materials such as graphite, carbon black, acetylene black, vapor grown carbon fiber, carbon nanotube, carbon nanohorn, and graphene, and conductive polymers such as polyaniline, polypyrrole, polythiophene, polyacetylene, and polyacene. The conductive additive can be used singly or in combination of two or more types thereof.

The compounding amount of the conductive additive is not particularly limited, and is preferably 0.05 to 9 wt%, more preferably 0.1 to 6 wt%, and still more preferably 0.2 to 3 wt% in the solid content. If the compounding amount of the conductive additive is within the above-mentioned range, good electrical conductivity can be obtained.

The binder can be appropriately selected from known materials and used, and is not particularly limited. Examples of the binder that can be used in the present invention include polyvinylidene fluoride (PVdF), polytetrafluoroethylene, a tetrafluoroethylene-hexafluoropropylene copolymer, a vinylidene fluoride-hexafluoropropylene copolymer, a vinylidene fluoride-chlorinated trifluoroethylene copolymer, polyvinyl alcohol, polyimide, an ethylene-propylene-diene terpolymer, styrene-butadiene rubber, carboxymethyl cellulose, polyacrylic acid, polyaniline, polyvinyl pyrrolidone, tetrafluoroethylene, polyethylene, and polypropylene. These can be used singly or in combination of two or more types.

The compounding amount of the binder is not particularly limited, and is preferably 0.14 to 10 wt%, more preferably 0.5 to 7 wt%, and still more preferably 1 to 5 wt% in the solid content. If the compounding amount of the binder is within the above-mentioned range, good adhesion to the current collecting substrate can be obtained without lowering the capacity.

As the binder, one which is dissolved in an appropriate solvent described later in advance before mixing can be used, if necessary.

The solvent is not particularly limited as long as the solvent can disperse or dissolve the raw materials to be used. Examples of such a solvent include the same as those exemplified in the description of the carbon nanostructure, and more preferable specific examples include water, NMP, dimethyl sulfoxide, ethylene carbonate, propylene carbonate, dimethyl carbonate, diethyl carbonate, methyl ethyl carbonate, γ-butyrolactone, tetrahydrofuran, dioxolane, sulfolane, dimethylformamide, and dimethylacetamide.
These solvents can be appropriately selected according to the raw materials to be used. NMP is suitable if a water-insoluble binder such as PVdF is used. The solvent can be used singly or in combination of two or more types thereof.

In the preparation of a battery material for forming an active material, the preparation method thereof is not particularly limited, and the battery material can be prepared by compounding components in any order.

If the solvent used in the synthesis of the carbon nanostructure is the same as or a solvent miscible with the solvents exemplified above, the obtained reaction liquid can be used as it is. Meanwhile, if the solvent used in the synthesis of the carbon nanostructure is a solvent that is not miscible with the solvents exemplified above, a carbon nanostructure isolated by removing the solvent from the reaction liquid is preferably used, or a carbon nanostructure subjected to solvent replacement with an appropriate solvent is preferably used. In particular, if water is used as a solvent in the synthesis of the carbon nanostructure, solvent replacement with the above-mentioned organic solvents is preferably performed.

Further, in the present invention, an active material-carbon nanostructure composite can be produced by preparing a solution or a dispersion containing an active material and a carbon nanostructure, and then removing the solvent before mixing the components. By using this composite in the battery material of the present invention, a battery having excellent rate characteristics and cycle characteristics can be obtained.

The electrode of the present invention includes an active material layer (thin film) composed of the battery material described above on a substrate that is a current collector, or is a thin film produced from the battery material alone.

If the active material layer is formed on a substrate, examples of the method for forming the active material layer include a method in which a composition for electrode formation prepared without using a solvent is pressure-formed on a substrate (dry process), and a method in which a composition for electrode formation is prepared using a solvent, applied to a current collector, and dried (wet process). The method for forming the active material layer is not particularly limited to these methods, and various conventionally known methods can be used. Examples of the wet process include various printing methods such as offset printing and screen printing, a doctor blade method, a dip coating method, a spin coating method, a bar coating method, a slit coating method, and an inkjet method.

Examples of the substrate used for the electrode include metal substrates of platinum, gold, iron, stainless steel, copper, aluminum, lithium and the like, alloy substrates composed of any combination of these metals, oxide substrates of indium tin oxide (ITO), indium zinc oxide (IZO), antimony tin oxide (ATO) and the like, and carbon substrates of glassy carbon, pyrolytic graphite, carbon felt and the like.

In the case of producing a thin film from the battery material alone, a thin film can be formed on a substrate that can be peeled off after thin film formation by appropriately using the wet process and the dry process described above, and a method of thinly spreading the battery material on the substrate using a glass rod or the like can also be adopted. As the substrate, a substrate having no adhesion to a thin film such as a glass plate can be used, and even a substrate having adhesion to a thin film can be used as long as the surface of the substrate is subjected to a treatment for enabling peeling of a thin film (bonding of release paper, formation of a release layer and the like).

The film thickness of the active material layer (thin film) is not particularly limited, and is preferably about 0.01 to 1,000 µm, and more preferably about 1 to 100 µm. If the thin film is used alone as an electrode, the film thickness is preferably 10 µm or more.

To further suppress elution of the active material contained in the electrode, the active material layer (thin film) can further contain a polyalkylene oxide and an ion conductive salt, or the electrode can be covered with a protective film. The protective film preferably contains a polyalkylene oxide and an ion conductive salt.

The polyalkylene oxide is not particularly limited, and polyethylene oxide, polypropylene oxide and the like are preferable.

The numerical average molecular weight of the polyalkylene oxide is preferably 300,000 to 900,000, and more preferably 500,000 to 700,000. The numerical average molecular weight is a value measured in terms of polystyrene by gel permeation chromatography (GPC) in which tetrahydrofuran is used as a solvent.

Examples of the ion conductive salt include lithium bis(trifluoromethanesulfonyl)imide (LiTFSI), lithium bis(pentafluoroethanesulfonyl)imide (LiBETI), lithium trifluoromethanesulfonate (LiCF₃SO₃), lithium perchlorate (LiClO₄), lithium tetrafluoroborate (LiBF₄), and lithium hexafluorophosphate (LiPF6). The ion conductive salt is preferably contained in an amount of 5 to 50 parts by weight per 100 parts by weight of the polyalkylene oxide.

The protective film can be formed, for example, by applying a composition containing a polyalkylene oxide, an ion conductive salt, and a solvent on a substrate on which the active material layer (thin film) is formed by a method such as a dip method, and drying the composition at 40 to 60°C for 30 to 120 minutes.

As the solvent, acetonitrile, dichloromethane and the like are preferable.

The film thickness of the protective film is not particularly limited, and is preferably about 10 to 1,000 µm, and more preferably about 50 to 500 µm.

The secondary battery of the present invention includes the above-mentioned electrode, and more specifically includes at least a pair of positive and negative electrodes, a separator interposed between the electrodes, and an electrolyte. At least one of the positive and negative electrodes is composed of the above-described electrode. Other components of the battery element can be appropriately selected from conventionally known components and used.

Examples of the material used for the separator include a porous polyolefin, a polyamide, and a polyester.

As the electrolyte, an electrolytic solution composed of an electrolyte salt, which is a main body of ion conduction, a solvent and the like can be suitably used from the viewpoint of easily exhibiting practically sufficient performance.

Examples of the electrolyte salt include lithium salts such as LiPF6, LiBF₄, LiN(C₂F₅SO₂)₂, LiAsF₆, LiSbF₆, LiAlF₄, LiGaF₄, LiInF₄, LiClO₄, LiN(CF₃SO₂)₂, LiCF₃SO₃, LiSiF6, and LiN(CF₃SO₂)(C₄F₉SO₂), metal iodides such as LiI, NaI, KI, CsI, and CaI₂, iodide salts of quaternary imidazolium compounds, iodide salts and perchlorates of tetraalkylammonium compounds, and metal bromides such as LiBr, NaBr, KBr, CsBr, and CaBr₂. These electrolyte salts can be used singly or as a mixture of two or more types thereof.

The solvent is not particularly limited as long as the solvent does not cause corrosion or decomposition of the substances that constitute the battery to deteriorate the performance, and dissolves the electrolyte salt. For example, cyclic esters such as ethylene carbonate, propylene carbonate, butylene carbonate, and γ-butyrolactone, ethers such as tetrahydrofuran and dimethoxyethane, and chain esters such as dimethyl carbonate, diethyl carbonate, and ethyl methyl carbonate are used as a nonaqueous solvent. These solvents can be used singly or as a mixture of two or more types thereof.

The electrode can be pressed as necessary. At this time, the pressing pressure is preferably 1 kN/cm or more. As the pressing method, a generally employed method can be used, and a die pressing method and a roll pressing method are particularly preferable. The pressing pressure is not particularly limited, and is preferably 2 kN/cm or more, and more preferably 3 kN/cm or more. The upper limit of the pressing pressure is preferably about 40 kN/cm, and more preferably about 30 kN/cm.

A battery produced using the battery material of the present invention is excellent in rate characteristics and cycle characteristics compared with general secondary batteries.

The form of the secondary battery and the type of the electrolyte are not particularly limited, any form such as a lithium ion battery, a nickel hydrogen battery, a manganese battery, and an air battery can be used, and a lithium ion battery is suitable. The lamination method and the production method are also not particularly limited.

The form of the cell is also not particularly limited, and cells of various conventionally known forms such as a cylindrical type, a flat-wound prismatic type, a stacked prismatic type, a coin type, a flat-wound laminate type, and a stacked laminate type can be adopted.

In the case of application to a coin-type cell, the above-mentioned electrode of the present invention can be punched into a predetermined disk shape and used.

For example, a lithium ion secondary battery can be produced by placing one electrode on a lid of a coin cell to which a washer and a spacer are welded, laying a separator having the same shape impregnated with an electrolytic solution thereon, further laying the electrode of the present invention from above with an active material layer facing down, placing a case and a gasket, and sealing them with a coin cell crimper.

### EXAMPLES

Hereinafter, though the present invention is more specifically described by way of Examples and Comparative Examples, the present invention is not limited to Examples below. The measuring instruments used in Examples are as follows.

### [Flow reactor]

Instrument: flow high temperature reaction system Phoenix Flow Reactor manufactured by Thales Nanotechnology Inc.

### [Measurement of conductivity]

Instrument: low resistance meter Loresta-GP manufactured by Mitsubishi Chemical Analytech Co., Ltd.

### [Elemental analysis]

Instrument: fully automatic elemental analyzer CHNS/O analyzer 2400 manufactured by PerkinElmer Co., Ltd.

The powder obtained by placing the obtained solution in an aluminum cup container and drying it on a hot plate at 150°C was analyzed.

### [Transmission electron microscope (TEM)]

Instrument: H -8000 manufactured by Hitachi, Ltd.

A TEM substrate was immersed in the obtained solution and dried, and the resultant was observed at an accelerating voltage of 200 kV and a magnification of 20,000 times to measure the diameters of 10 particles and determine the number mean particle size.

### [Planetary centrifugal mixer]

Instrument: Awatori Rentaro ARE-310 manufactured by THINKY CORPORATION

### [Roll pressing machine]

Instrument: Pressurizing/heating roll pressing machine SA-602 manufactured by Takumi Giken Co., Ltd.

### [Coin cell crimper]

Instrument: manual coin cell crimper CR2032 manufactured by Hohsen Corporation

### [Micrometer]

Instrument: IR54 manufactured by Mitutoyo Corporation

### [Charge-discharge measuring instrument]

Instrument: TOSCAT 3100 manufactured by Toyo System Co., Ltd.

### [1] Production of carbon nanostructure (carbon quantum dot)

### (1) Preparation of aqueous solution of carbon nanostructure

### [Example 1-1]

Using 20.0 g (0.1 mol) of citric acid (manufactured by FUJIFILM Wako Pure Chemical Corporation) as a carbon source, 12.5 g (0.2 mol) of ethylenediamine (manufactured by Tokyo Chemical Industry Co., Ltd.) as a nitrogen source was dissolved in 292 g of water to prepare an aqueous solution having a raw material concentration of 10 wt%. Using a flow reactor, the aqueous solution was subjected to continuous synthesis at a flow rate of 4 mL/min (residence time of 2 minutes) and a temperature of 300°C to obtain an aqueous solution A1 of a carbon nanostructure.

The result of elemental analysis was as follows: carbon: 38.8 wt%, hydrogen: 7.1 wt%, and nitrogen: 17.0 wt%. The particle size was 5 nm.

Water was evaporated under reduced pressure from the obtained aqueous solution A1 to obtain a dark brown solid D1. The solid D1 was placed in a high-resistance probe unit for powder, and pressurized to 20 kN with a low resistance meter Loresta-GP to measure the conductivity, which was found to be equal to or lower than the detection limit.

### [Example 1-2]

An aqueous solution A2 was prepared in the same manner as in Example 1-1 except that the reaction temperature was changed to 340°C.

The result of elemental analysis was as follows: carbon: 46.0 wt%, hydrogen: 7.9 wt%, and nitrogen: 17.6 wt%. The particle size was 5 nm.

In the same manner as in Example 1-1, the conductivity of the dark brown solid D2 obtained by evaporating water from the obtained aqueous solution A2 under reduced pressure was measured and found to be equal to or lower than the detection limit.

### [Example 1-3]

An aqueous solution A3 was prepared in the same manner as in Example 1-1 except that the raw material ethylenediamine was changed to N-ethylethylenediamine.

The result of elemental analysis was as follows: carbon: 57.5 wt%, hydrogen: 7.6 wt%, and nitrogen: 16.7 wt%. The particle size was 14 nm.

In the same manner as in Example 1-1, the conductivity of the dark brown solid D3 obtained by evaporating water from the obtained aqueous solution A3 under reduced pressure was measured and found to be equal to or lower than the detection limit.

### [Example 1-4]

An aqueous solution A4 was prepared in the same manner as in Example 1-1 except that the raw material ethylenediamine was changed to 2-(2-aminoethylamino)ethanol.

The result of elemental analysis was as follows: carbon: 53.3 wt%, hydrogen: 7.0 wt%, and nitrogen: 16.0 wt%. The particle size was 7 nm.

In the same manner as in Example 1-1, the conductivity of the dark brown solid D4 obtained by evaporating water from the obtained aqueous solution A4 under reduced pressure was measured and found to be equal to or lower than the detection limit.

### [Comparative Example 1-1]

An aqueous solution A5 was prepared in the same manner as in Example 1-1 except that the raw materials were changed to only citric acid.

The result of elemental analysis was as follows: carbon: 44.5 wt%, hydrogen: 4.5 wt%, and nitrogen: 0.0 wt%. The particle size was 10 nm.

In the same manner as in Example 1-1, the conductivity of the dark brown solid D5 obtained by evaporating water from the obtained aqueous solution A5 under reduced pressure was measured and found to be equal to or lower than the detection limit.

### [Comparative Example 1-2]

An aqueous solution A6 was prepared in the same manner as in Example 1-1 except that the raw materials were changed to only glucose and the reaction temperature was changed to 250°C.

The result of elemental analysis was as follows: carbon: 41.9 wt%, hydrogen: 6.6 wt%, and nitrogen: 0.0 wt%. The particle size was 200 nm.

In the same manner as in Example 1-1, the conductivity of the dark brown solid D6 obtained by evaporating water from the obtained aqueous solution A6 under reduced pressure was measured and found to be equal to or lower than the detection limit.

### (2) Solvent replacement

### [Example 2-1]

An appropriate amount of NMP was added to the aqueous solution A1 obtained in Example 1-1, and water was removed by evaporation under reduced pressure with a rotary evaporator. The resulting solution was passed through a 1.0 µm filter to remove aggregates, thereby an NMP solution B1 was obtained. The solid content was measured as a dry residue after drying at 150°C for 2 hours, and found to be 6.9 wt%.

### [Example 2-2]

An NMP solution B2 was obtained in the same manner as in Example 2-1 except that the aqueous solution A2 obtained in Example 1-2 was used instead of the aqueous solution A1. The solid content was 6.2 wt%.

### [Example 2-3]

An NMP solution B3 was obtained in the same manner as in Example 2-1 except that the aqueous solution A3 obtained in Example 1-3 was used instead of the aqueous solution A1. The solid content was 5.4 wt%.

### [Example 2-4]

An NMP solution B4 was obtained in the same manner as in Example 2-1 except that the aqueous solution A4 obtained in Example 1-4 was used instead of the aqueous solution A1. The solid content was 4.5 wt%.

### [Comparative Example 2-1]

An NMP solution B5 was obtained in the same manner as in Example 2-1 except that the aqueous solution A5 obtained in Comparative Example 1-1 was used instead of the aqueous solution A1. The solid content was 5.4 wt%.

### [Comparative Example 2-2]

An NMP solution B6 was obtained in the same manner as in Example 2-1 except that the aqueous solution A6 obtained in Comparative Example 1-2 was used instead of the aqueous solution A1. The solid content was 12.6 wt%.

### [2] Production and evaluation of lithium ion battery

### (1) Production of electrode

### [Example 3-1]

A ternary positive electrode active material Li(Ni_{0.5}Co_{0.2}Mn_{0.3})O₂ (NCM523-5Y, manufactured by Beijing Easping Material Technology) (2.781 g), acetylene black (manufactured by Denki Kagaku Kogyo Kabushiki Kaisha) (0.052 g) as a conductive additive, the solution B1 prepared in Example 2-1 (0.042 g), and an NMP solution of PVdF (#7300 manufactured by KUREHA CORPORATION) (solid content concentration: 5 wt%) (1.28 g) as a binder were mixed (solid content weight ratio: 95.9 : 1.8 : 0.1 : 2.2), and NMP (0.859 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C1 (film thickness: 40 µm).

### [Example 3-2]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, the solution B1 prepared in Example 2-1 (0.210 g), and an NMP solution of PVdF (#7300 manufactured by KUREHA CORPORATION) (solid content concentration: 5 wt%) (1.28 g) as a binder were mixed (solid content weight ratio: 95.5 : 1.8 : 0.5 : 2.2), and NMP (0.692 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C2 (film thickness: 40 µm).

### [Example 3-3]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, the solution B2 prepared in Example 2-2 (0.233 g), and an NMP solution of PVdF (#7300 manufactured by KUREHA CORPORATION) (solid content concentration: 5 wt%) (1.28 g) as a binder were mixed (solid content weight ratio: 95.5 : 1.8 : 0.5 : 2.2), and NMP (0.669 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C3 (film thickness: 37 µm).

### [Example 3-4]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, the solution B3 prepared in Example 2-3 (0.065 g), and an NMP solution of PVdF (#7300 manufactured by KUREHA CORPORATION) (solid content concentration: 5 wt%) (1.28 g) as a binder were mixed (solid content weight ratio: 95.5 : 1.8 : 0.5 : 2.2), and NMP (0.826 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C4 (film thickness: 42 µm).

### [Example 3-5]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, the solution B4 prepared in Example 2-4 (0.054 g), and an NMP solution of PVdF (#7300 manufactured by KUREHA CORPORATION) (solid content concentration: 5 wt%) (1.28 g) as a binder were mixed (solid content weight ratio: 95.5 : 1.8 : 0.5 : 2.2), and NMP (0.837 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C5 (film thickness: 42 µm).

### [Comparative Example 3-1]

A ternary positive electrode active material Li(Ni_{0.5}Co_{0.2}Mn_{0.3})O₂ (NCM523-5Y, manufactured by Beijing Easping Material Technology) (2.784 g), acetylene black (manufactured by Denki Kagaku Kogyo Kabushiki Kaisha) (0.052 g) as a conductive additive, and an NMP solution of PVdF (#7300 manufactured by KUREHA CORPORATION) (solid content concentration: 5 wt%) (1.28 g) as a binder were mixed (solid content weight ratio: 96 : 1.8 : 2.2), and NMP (0.888 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C6 (film thickness: 40 µm).

### [Comparative Example 3-2]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, the solution B5 prepared in Comparative Example 2-1 (0.271 g), and an NMP solution of PVdF (#7300 manufactured by KUREHA CORPORATION) (solid content concentration: 5 wt%) (1.28 g) as a binder were mixed (solid content weight ratio: 95.5 : 1.8 : 0.5 : 2.2), and NMP (0.635 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C7 (film thickness: 40 µm) .

### [Comparative Example 3-3]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, the solution B6 prepared in Comparative Example 2-2 (0.115 g), and an NMP solution of PVdF (#7300 manufactured by KUREHA CORPORATION) (solid content concentration: 5 wt%) (1.28 g) as a binder were mixed (solid content weight ratio: 95.5 : 1.8 : 0.5 : 2.2), and NMP (0.787 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C8 (film thickness: 41 µm).

### [Comparative Example 3-4]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, an NMP solution of polyvinylpyrrolidone (manufactured by Tokyo Chemical Industry Co., Ltd., K15, molecular weight: 10,000) (solid content concentration: 5 wt%) (0.290 g), and an NMP solution of PVdF (#7300, manufactured by KUREHA CORPORATION) (solid content concentration: 5 wt%) (1.28 g) as a binder were mixed (solid content weight ratio: 95.5 : 1.8 : 0.5 : 2.2), and NMP (0.612 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C9 (film thickness: 44 µm).

### [Comparative Example 3-5]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.052 g) as a conductive additive, an NMP solution of polyethyleneimine (EPOMIN SP-200, manufactured by NIPPON SHOKUBAI CO., LTD., molecular weight: 10,000) (solid content concentration: 5 wt%) (0.290 g), and an NMP solution of PVdF (#7300, manufactured by KUREHA CORPORATION) (solid content concentration: 5 wt%) (1.28 g) as a binder were mixed (solid content weight ratio: 95.5 : 1.8 : 0.5 : 2.2), and NMP (0.612 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C10 (film thickness: 43 µm).

### [Comparative Example 3-6]

A ternary positive electrode active material Li(Ni_{0.5}Co_{0.2}Mn_{0.3})O₂ (NCM523-5Y, manufactured by Beijing Easping Material Technology) (2.770 g), acetylene black (manufactured by Denki Kagaku Kogyo Kabushiki Kaisha) (0.055 g) as a conductive additive, and an NMP solution of PVdF (#7300 manufactured by KUREHA CORPORATION) (solid content concentration: 5 wt%) (1.28 g) as a binder were mixed (solid content weight ratio: 95.5 : 2.3 : 2.2), and NMP (0.888 g) was further mixed so that the total solid content concentration would be 58 wt%. The obtained product was mixed with a planetary centrifugal mixer (2,000 rpm, 3 times, 10 min each) to prepare slurry for electrode formation. This was uniformly spread on an aluminum foil (1085, manufactured by UACJ Corporation, substrate thickness: 15 µm) by a doctor blade method (wet film thickness: 100 µm), and then dried at 80°C for 30 minutes and then at 120°C for 30 minutes to form an active material layer. This was pressure-bonded with a roll press machine to produce an electrode C11 (film thickness: 40 µm).

### (2)Production of lithium ion battery

### [Example 4-1]

The electrode C1 produced in Example 3-1 was punched into a disk shape having a diameter of 10 mm, and the weight thereof was measured. Then, the disc shape electrode C1 was vacuum-dried at 120°C for 12 hours, and transferred to a glove box filled with argon.

A stack of 6 sheets of lithium foil obtained by punching lithium foil into a piece having a diameter of 14 mm (manufactured by Honjo Chemical Corporation, thickness: 0.17 mm) were placed on a lid of a 2032 type coin cell (manufactured by Hohsen Corp.) to which a washer and a spacer were welded, and one separator obtained by punching a separator into a piece having a diameter of 16 mm (manufactured by Celgard, LLC., 2400) and impregnated with an electrolytic solution (manufactured by Kishida Chemical Co., Ltd., ethylene carbonate : diethyl carbonate = 1 : 1 (volume ratio), containing 1 mol/L of lithium hexafluorophosphate (LiPF6) as an electrolyte) for 24 hours or more was stacked thereon. Further, from above, the electrode C1 was stacked with the surface coated with the active material facing down. After dropping one drop of the electrolytic solution, a case and a gasket were placed thereon, and the resulting stack was sealed with a coin cell crimper. Then, the stack was allowed to stand for 24 hours to obtain a secondary battery for testing.

### [Examples 4-2 to 4-5]

Secondary batteries for testing were produced in the same manner as in Example 4-1 except that the electrodes C2 to C5 produced in Examples 3-2 to 3-5 were used instead of the electrode C1.

### [Comparative Examples 4-1 to 4-6]

Secondary batteries for testing were produced in the same manner as in Example 4-1 except that the electrodes C6 to C11 produced in Comparative Examples 3-1 to 3-6 were used instead of the electrode C1.

For the lithium ion secondary batteries produced in Examples 4-1 to 4-5 and Comparative Examples 4-1 to 4-6, physical properties of the electrodes were evaluated under the following conditions using a charge-discharge measuring instrument. The ratio of the discharge capacity at the discharge rate at the time of discharge at 0.2 C and 10 C of each secondary battery based on the discharge capacity of Comparative Example 4-1 is shown in Table 1.

### [Measurement condition]

- Rate characteristics:
   Current: 0.2 C constant current charge, 0.2 C, 0.5 C, 3 C, 5 C, 10 C constant current discharge (the capacity of Li(Ni_{0.5}Co_{0.2}Mn_{0.3})O₂ was set to 160 mAh/g, the discharge rate for every 2 cycles was increased, and finally, the discharge rate was set to 0.5 C.)
- Cutoff voltage: 4.20 V - 3.00 V
- Temperature: room temperature

**[Table 1]**

| | Electrode | Material | Production condition | Amount added [wt%] | Discharge capacity ratio at 0.2 C [*%*] | Discharge capacity ratio at 10 C [*%*] |
|---|---|---|---|---|---|---|
| Example 4-1 | C1 | Carbon quantum dot | CA: EDA = 1 : 2 300°C | 0.1 | 99.7 | 109.4 |
| Example 4-2 | C2 | Carbon quantum dot | CA: EDA = 1 : 2 300°C | 0.5 | 99.8 | 102.8 |
| Example 4-3 | C3 | Carbon quantum dot | CA: EDA = 1 : 2 340°C | 0.5 | 101.1 | 134.8 |
| Example 4-4 | C4 | Carbon quantum dot | CA : EEDA = 1 : 2 300°C | 0.1 | 99.8 | 109.0 |
| Example 4-5 | C5 | Carbon quantum dot | CA: AEAE = 1: 2 300°C | 0.1 | 101.2 | 106.2 |
| Comparative Example 4-1 | C6 | No addition | | 0 | 100 | 100 |
| Comparative Example 4-2 | C7 | Carbon quantum dot | CA only 300°C | 0.5 | 90.5 | 64.9 |
| Comparative Example 4-3 | C8 | Carbon particle | Glucose only 250°C | 0.5 | 92.3 | 56.0 |
| Comparative Example 4-4 | C9 | Polyvinylpyrrolidone | | 0.5 | 99.7 | 81.5 |
| Comparative Example 4-5 | C10 | Polyethyleneimine | | 0.5 | 98.6 | 90.4 |
| Comparative Example 4-6 | C11 | AB (increase in conductive additive) | | 0.5 | 100.3 | 92.5 |

| | | | | | | |
|---|---|---|---|---|---|---|
| ^{∗} In the table, CA represents citric acid, EDA represents ethylenediamine, EEDA represents N-ethylethylenediamine, AEAE represents 2-(2-aminoethylamino)ethanol, and AB represents acetylene black. | | | | | | |

For the lithium ion secondary batteries produced in Examples 4-1, 4-4, and 4-5 and Comparative Example 4-1, physical properties of the electrodes were evaluated under the following conditions using a charge-discharge measuring instrument. The ratio of the charge capacity at the charge rate at the time of charge at 0.2 C and 10 C of each secondary battery based on the charge capacity of Comparative Example 4-1 is shown in Table 2.

### [Measurement condition]

- Rate characteristics:
   Current: 0.2 C, 0.5 C, 3 C, 5 C, 10 C constant current charge, 0.2 C constant current discharge (the capacity of Li(Ni_{0.5}Co_{0.2}Mn_{0.3})O₂ was set to 160 mAh/g, the charge rate for every 2 cycles was increased, and finally, the charge rate was set to 0.5 C.)
- Cutoff voltage: 4.20 V - 3.00 V
- Temperature: room temperature

**[Table 2]**

| | Electrode | Material | Production condition | Amount added [wt%] | Charge capacity ratio at 0.2 C [*%*] | Charge capacity ratio at 10 C [*%*] |
|---|---|---|---|---|---|---|
| Example 4-1 | C1 | Carbon quantum dot | CA: EDA = 1 : 2 300°C | 0.1 | 100.0 | 108.6 |
| Example 4-4 | C4 | Carbon quantum dot | CA : EEDA = 1: 2 300°C | 0.1 | 99.7 | 110.4 |
| Example 4-5 | C5 | Carbon quantum dot | CA:AEAE=1:2 300°C | 0.1 | 101.2 | 105.4 |
| Comparative Example 4-1 | C6 | No addition | | 0 | 100 | 100 |

| | | | | | | |
|---|---|---|---|---|---|---|
| ^{∗} In the table, CA represents citric acid, EDA represents ethylenediamine, EEDA represents N-ethylethylenediamine, and AEAE represents 2-(2-aminoethylamino)ethanol. | | | | | | |

The results in Tables 1 and 2 confirmed that a battery having excellent rate characteristics can be obtained by using a battery material including the carbon nanostructure defined in the present invention. It was also confirmed that the effect can be exhibited in both cases of charge (input) and discharge (output).

## Claims

1. A battery material, comprising:
a carbon nanostructure,
wherein the carbon nanostructure is non-conductive and contains nitrogen.

2. The battery material according to claim 1, wherein the carbon nanostructure is a carbon quantum dot.

3. The battery material according to claim 1 or 2, wherein the nitrogen is contained in an amount of 5 to 30 wt%.

4. The battery material according to any one of claims 1 to 3, wherein the nitrogen is derived from an amine.

5. The battery material according to any one of 1 to 4, wherein carbon contained in the carbon nanostructure is derived from a polycarboxylic acid or a saccharide.

6. The battery material according to any one of claims 1 to 5, further comprising an active material, conductive carbon, and a binder.

7. The battery material according to claim 6, wherein the active material is at least one selected from a metal, a metalloid, a metal alloy, a metal oxide, a metalloid oxide, a metal phosphorus oxide, a metal sulfide, and a metal nitride.

8. The battery material according to claim 7, wherein the active material is at least one selected from FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, and 0.05 ≤ z ≤ 1.10 and 0.5 ≤ y ≤ 1.0.), Li(NiₐCo_{b}Mn_{c})O₂ (provided that 0 < a < 1,0 < b < 1,0 < c < 1,a + b + c = 1), Li₄Ti₅O₁₂, Si, SiOx, AlOx, SnOx, SbOx, BiOx, GeOx, AsOx, PbOx, ZnOx, CdOx, InOx, TiOx, and GaOₓ (provided that 0 < x ≤ 2).

9. The battery material according to any one of claims 6 to 8, for electrode formation.

10. An electrode, comprising:
an active material layer composed of the battery material according to claim 9.

11. A secondary battery, comprising the electrode according to claim 10.

12. A method for producing the battery material according to any one of claims 1 to 9, comprising the step of:
synthesizing a carbon nanostructure by mixing and heating a polycarboxylic acid or a saccharide; an amine; and a solvent.

13. The method for producing the battery material according to claim 12, wherein the synthesis is performed by solvothermal synthesis.

14. The method for producing the battery material according to claim 13, wherein the synthesis is performed by hydrothermal synthesis.

15. The method for producing the battery material according to claim 14, comprising the step of:
replacing a solvent of an aqueous carbon nanostructure solution obtained by hydrothermal synthesis with an organic solvent.

16. A method for producing the battery material according to any one of claims 6 to 8, comprising the step of:
preparing a solution or a dispersion containing an active material and a carbon nanostructure, and then removing a solvent to produce an active material-carbon nanostructure composite.
